# EUROPÄISCHE PATENTSCHRIFT

(11) **EP 0 960 549 B1**
(45) Veröffentlichungstag und Bekanntmachung des Hinweises auf die Patenterteilung: **22.10.2003**
(21) Anmeldenummer: 98904172.8
(22) Anmeldetag: 03.02.1998
(51) Int. Cl.: H04Q 11/04

(54) **VERFAHREN UND SCHALTUNGSANORDNUNG ZUM ÜBERTRAGEN DIGITALER DATEN MIT EINEM ERWEITERTEN ISDN-VERFAHREN**
METHOD AND CIRCUITRY FOR TRANSMITTING DIGITAL DATA USING AN ENHANCED ISDN TECHNIQUE
PROCEDE ET CIRCUIT POUR TRANSMETTRE DES DONNEES NUMERIQUES A L'AIDE D'UNE TECHNIQUE ISDN ELARGIE

(30) Priorität: 17.02.1997 DE 19706080
(43) Veröffentlichungstag der Anmeldung: 01.12.1999
(73) Patentinhaber: SIEMENS AKTIENGESELLSCHAFT, 80333 München (DE)
(72) Erfinder: WILDMOSER, Johann, D-85276 Pfaffenhofen (DE); MÖHRMANN, Karl-Heinz, D-81369 München (DE)
(86) Internationale Anmeldenummer: EP9800572
(87) Internationale Veröffentlichungsnummer: WO98036611

(56) Entgegenhaltungen:
- DE-A- 19 621 750
- US-A- 4 899 337
- US-A- 5 598 413
- GINGELL J: "BUILDING BLOCKS FOR ISDN" ELECTRONICS & WIRELESS WORLD, Bd. 95, Nr. 1646, 1. Dezember 1989, Seiten 1172-1174, XP000072723

## Beschreibung

Die Erfindung betrifft ein Verfahren zum Übertragen digitaler Daten nach dem Zeit-Multiplexverfahren, bei dem die Daten innerhalb einer Folge von Zeitrahmen übertragen werden. Im jeweiligen Zeitrahmen stimmt zumindest die Anzahl von übertragenen Datenbits mit dem ISDN-Standard überein.

Der ISDN-Standard (integrated services digital network) wird häufig für die Übertragung von Daten auf Zweidrahtleitungen verwendet, z.B. für das Telefon, das Telefax und für die Datenübertragungen zwischen Rechnern. Nachteilig am bekannten ISDN-Standard ist, daß pro Leitung nur zwei Nutzkanäle von jeweils 64 kbit/s (Kilobit je Sekunde) zur Verfügung stehen. Die Übertragung von Bewegtbildern erfordert aber z.B. Datenraten in der Größenordnung mehrerer 100 kbit/s bis zu einigen Mbit/s und ist demzufolge bei einer Datenübertragung gemäß dem bekannten ISDN-Standard nicht möglich.

Der Artikel "Building blocks for ISDN" von Y. Gingell, Electronics & Wireless world, Bd.95, Nr. 1646, 1. Dezember 1989, Seiten 1172-1174, beschreibt die einzelnen Module des ISDN-standard.

Auf der anderen Seite sind Übertragungsstandards für hohe Datenraten bekannt, z.B. der HDSL-Standard (High bit rate digital subscriber line), der VDSL-Standard (Very high bit rate digital subscriber line) sowie der ADSL-Standard (Asymmetric digital subscriber line). Diese Standards haben gegenüber dem ISDN-Standard eine mindestens fünfzehn mal so große Datenübertragungsrate.

Sollen vorhandene Endgeräte, vorhandene Zweidrahtleitungen und das bewährte ISDN-Konzept auch bei höheren Datenübertragungsraten genutzt werden, wobei die Datenübertragungsrate ausgehend von derzeit 128 kbit/s erheblich erhöht werden soll, so bietet keiner der genannten Standards dafür eine Lösung.

Es ist Aufgabe der Erfindung, ein einfaches Verfahren zur Übertragung von Daten anzugeben, das mit dem ISDN-Standard kompatibel ist, jedoch höhere Datenraten als dieser ermöglicht.

Diese Aufgabe wird durch ein Verfahren mit den Merkmalen des Patentanspruchs 1 gelöst. Vorteilhafte Weiterbildungen sind in den Unteransprüchen angegeben.

Die Erfindung geht von der Erkenntnis aus, daß zur Erhöhung der Datenrate der bekannte ISDN-Standard, der für verbindungsorientierte Übertragungen entwickelt wurde, an mehreren Stellen geändert werden muß. Um bei Bedarf jedoch auch Übertragungen nach dem ISDN-Standard zu ermöglichen, dürfen grundlegende Forderungen des ISDN-Standards nicht verändert werden, bzw. müssen zumindest beim Festlegen eines erweiterten ISDN berücksichtigt werden. Das betrifft insbesondere die Anzahl von Datenbits in einem Zeitrahmen und die durch den bekannten ISDN-Standard vorgegebene Zeit zur Übertragung der Zeitrahmen. Diese Zeit ist z.B. im technischen Bericht ETR 080 des Europäischen-Telekommunikations-Standardisierungs-Instituts für den ISDN-Standard mit der Option 2B1Q-Übertragung (2 Binary, 1 Quaternary) auf 1,5 Millisekunden festgelegt. Dieselbe Festlegung findet sich auch in der ITU-Empfehlung G.961 (International Telecommunication Union).

Bei der Erfindung wird deshalb die Anzahl von Datenbits je Zeitrahmen beibehalten. Jedoch werden innerhalb der durch den bekannten ISDN-Standard vorgegebenen Zeit zur Übertragung eines ISDN-Standard-Zeitrahmens (1,5 ms) mehrere Zeitrahmen übertragen, die einen Gesamtrahmen bilden. Durch diese Maßnahme erhöht sich bereits die Datenübertragungskapazität entsprechend der Anzahl von Zeitrahmen in einem Gesamtrahmen. Werden auch andere durch den bekannten ISDN-Standard vorgegebenen Merkmale eines Zeitrahmens beibehalten, wie z.B. die Zuordnung von Zeitschlitzen zu Nutzkanälen und Datenkanälen, so stehen durch die erhöhte Übertragungskapazität mehr ISDN-Kanäle auf einer Datenleitung zur Verfügung. Sind z.B. zwei Zeitrahmen in einem Gesamtrahmen vorhanden, so können vier Kanäle zu jeweils 64 kbit/s für die Übertragung von Nutzdaten genutzt werden.

Bei der Erfindung hat mindestens ein Gesamtrahmen der Folge von übertragenen Gesamtrahmen ein Rahmenkennzeichen. Vorzugsweise tritt das Rahmenkennzeichen zyklisch auf, z.B. bei jedem Gesamtrahmen oder bei jedem zehnten Gesamtrahmen. Anhand des Rahmenkennzeichens erfolgt die Zuordnung der Zeitrahmen zu ihren Gesamtrahmen. Durch das Rahmenkennzeichen kann genau ermittelt werden, welche Zeitrahmen jeweils zu einem Gesamtrahmen gehören und welche Bits in einem Zeitrahmen welchen Kanälen zugeordnet sind.

Durch das Rahmenkennzeichen wird ein einheitliches Konzept für die Bearbeitung der Gesamtrahmen möglich. Sind bei einem Zeitrahmen oder bei zwei Zeitrahmen je Gesamtrahmen Unterscheidungen der Zeitrahmen gegebenenfalls noch entbehrlich, so treten bei einer steigenden Anzahl von Zeitrahmen je Gesamtrahmen Probleme bei der Kanalzuordnung auf. Sind die den einzelnen Kanälen zugeordneten Bits oder Zeitschlitze in den Zeitrahmen unterschiedlich angeordnet, was zu einer Erhöhung der Flexibilität der Datenübertragung führt, so müssen die Zeitrahmen voneinander eindeutig unterscheidbar sein. Genau dies wird durch das Rahmenkennzeichen erreicht.

Zu einer unterschiedlichen Anordnung der den einzelnen Kanälen zugeordneten Bits in den Zeitrahmen eines Gesamtrahmens kommt es auch durch die Forderung, die Bits oder Zeitschlitze eines Kanals innerhalb eines Zeitrahmens möglichst gleichmäßig zu verteilen und somit auch innerhalb des Gesamtrahmens zu verschachteln. Durch das Verschachteln wird erreicht, daß bei einer Störung zwar vergleichbar mehr Kanäle betroffen sind, die Anzahl von gestörten Daten je Kanal aber geringer wird. Somit kann eine Fehlerkorrektur leichter durchgeführt werden.

In einem Ausführungsbeispiel der Erfindung wird die Anzahl von Zeitrahmen je Gesamtrahmen in einem Einmeßvorgang abhängig von der Übertragungsqualität der Übertragungsstrecke bestimmt. Durch diese Maßnahme kann abhängig von der Qualität und auch von der Länge einer bereits vorhandenen Leitung die maximal zulässige Übertragungskapazität bestimmt werden. Die Übertragung erfolgt dann relativ fehlerfrei, da Datenübertragungskapazität und Übertragungsstrecke optimal aneinander angepaßt sind. Vorzugsweise wird der Einmeßvorgang wiederholt, wenn während der Übertragung eine vorgegebene Fehlerrate für die Übertragung der Daten überschritten wird. Dies ist z.B. der Fall, wenn sich die Übertragungsqualität der Leitung über die Jahre ändert, z.B. durch Störstrahlung neu zugeschalteter Leitungen.

In einem weiteren Ausführungsbeispiel der Erfindung wird als Rahmenkennzeichnung mindestens ein Datum an einer vorgegebenen Position im Gesamtrahmen mit einem vorgegebenen Wert verwendet, z.B. einer binären "0". Dieser Wert weicht von einem in den anderen Zeitrahmen des jeweiligen Gesamtrahmens für diese Position vorgegebenen Wert ab. Dabei muß jedoch gewährleistet sein, daß dieses Bit auch bei Übertragungsfehlern einwandfrei ausgewertet werden kann. Die Rahmenkennung muß daher in festen zeitlichen Abständen zyklisch wiederholt werden. Wird z.B. das im bekannten ISDN-Standard nicht verwendete Bit mit der Nummer "240" jedes achten Zeitrahmens als Rahmenkennzeichen verwendet, so ist diese Forderung erfüllt.

Das Ermitteln des Rahmenkennzeichens erfolgt zweckmäßig in Kombination mit dem Ermitteln der durch den bekannten ISDN-Standard vorgegebenen Rahmenkennzeichen in den Zeitrahmen. Da die Zeitrahmenkennzeichen in der Regel mehrere Bitstellen haben, z.B. achtzehn18, ist ein Ermitteln dieser Kennzeichen einfach. Ausgehend von den Zeitrahmen kann das Ermitteln des Rahmenkennzeichens des Gesamtrahmens, das z.B. nur ein einzelnes Datum ist, durch einfaches Abzählen der nach dem Zeitrahmenkennzeichen übertragenen Daten erfolgen.

In Ausführungsbeispielen der Erfindung können ausschließlich Daten einer verbindungsorientierten Übertragung übertragen werden. Es ist auch möglich, ausschließlich Daten einer nicht verbindungsorientierten Übertragung zu übertragen, z.B. für Zugriffe auf das Internet. Vorgesehen ist auch eine gleichzeitige verbindungsorientierte und nicht verbindungsorientierte Übertragung. Bei einer nicht verbindungsorientierten Übertragung werden die Daten zu Datenpaketen zusammengefaßt, die in einem ersten Teil Daten über das Datenpaket (z.B. Adresse, Länge des Datenpakets, Art des Datenpakets) und in einem weiteren Teil die Nutzdaten enthalten. Bei der Erzeugung des Gesamtrahmens werden diese Datenpakete zerteilt und in den Zeitschlitzen eines vorgegebenen Kanals übertragen. Der Beginn eines Pakets wird zweckmäßig durch ein Paketkennzeichen im Gesamtrahmen signalisiert. Zur Signalisierung können z.B. durch den ISDN-Standard noch nicht benutzte Bitstellen innerhalb der Zeitrahmen genutzt werden.

Durch das Verfahren nach der Erfindung ist die Takterzeugung für die Datenübertragung einfach. Ausgehend von einem vorgegebenen Grundtakt werden durch Einstellen von Teilerverhältnissen in Teilern einer Teilerkette die Taktsignale entsprechend der Anzahl von Zeitrahmen je Gesamtrahmen erzeugt. Die Teilerverhältnisse werden z.B. nach dem bereits erwähnten Einmeßvorgang festgelegt.

Die Erfindung betrifft in einem weiteren Aspekt eine Schaltungsanordnung zum Übermitteln von Daten, mit den Merkmalen des Patentanspruchs 12. Diese Schaltungsanordnung dient insbesondere zum Durchführen des Verfahrens nach der Erfindung bzw. zum Durchführen einer zweckmäßigen Ausführungsform der Erfindung. Die oben genannten technischen Wirkungen gelten somit auch für die Schaltungsanordnung.

Im folgenden werden Ausführungsbeispiele der Erfindung unter Bezugnahme auf die Zeichnungen erläutert. Darin zeigen:
- Figur 1: den Anschluß eines Teilnehmers an eine Datenleitung mit einer Übertragung nach dem erweiterten ISDN-Verfahren,
- Figur 2: die Darstellung eines standardgemäßen ISDN-Zeitrahmens für die Option 2B1Q-Übertragung,
- Figur 3: eine Gegenüberstellung eines ISDN-Zeitrahmens gemäß Figur 2 und eines Gesamtrahmens des erweiterten ISDN-Verfahrens,
- Figur 4: die wesentlichen elektronischen Einheiten zum Erzeugen verschiedener Taktsignale in einer Leitungsabschlußeinheit,
- Figur 5: die wesentlichen elektronischen Einheiten zum Erzeugen verschiedener Taktsignale in einer Netzabschlußeinheit,
- Figur 6: eine Tabelle mit Teilungsverhältnissen für die Takterzeugung bei Verwendung eines Gesamtrahmens, und
- Figur 7: den Aufbau der Netzabschlußeinheit und einer Teilnehmer-Anschlußkarte.

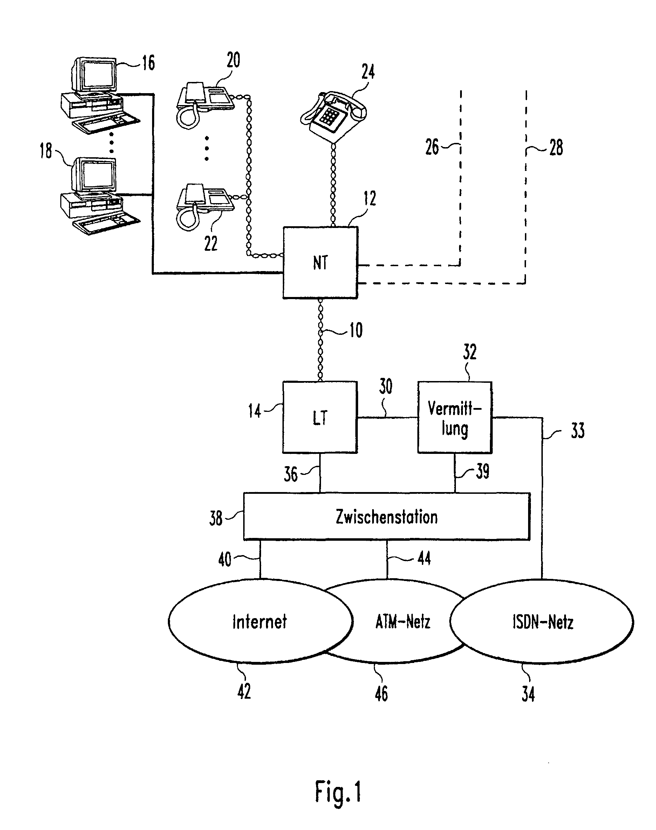

Figur 1 zeigt den Anschluß eines Teilnehmers eines Telekommunikationssystems an eine Datenleitung 10, auf welcher Daten nach einem erweiterten ISDN-Verfahren übertragen werden. Die Datenleitung 10 verbindet eine Leitungsabschlußeinheit 14 auf der Vermittlungsseite mit einer Netzabschlußeinheit 12 auf der Teilnehmerseite über eine Strecke von z.B. 2 km.

An die Netzabschlußeinheit 12 sind als Endgeräte Datenverarbeitungsendgeräte 16 bis 18, digitale Telefonapparate 20 bis 22 sowie ein analoger Telefonapparat 24 angeschlossen. An Leitungen 26 und 28 sind weitere nicht dargestellte Endgeräte oder Nebenstellen des Teilnehmers angeschlossen.

In der Leitungsabschlußeinheit 14 werden die vom Teilnehmer über die Datenleitung 10 übertragenen Daten nach Daten für eine verbindungsorientierte Übertragung und nach Daten für eine nicht verbindungsorientierte Übertragung getrennt. Die Daten für die verbindungsorientierte Übertragung werden über eine Leitung 30 an eine lokale Vermittlungsstelle 32 übermittelt, welche in einem Koppelfeld die jeweilige Verbindung aufbaut. Die verbindungsorientiert übertragenen Daten gelangen über eine Leitung 33 in das ISDN-Netz 34.

Daten, die nicht verbindungsorientiert übertragen werden, werden von der Leitungsabschlußeinheit 14 auf einer Leitung 36 zu einer Zwischenstation 38 übermittelt. Zu den nichtverbindungsorientierten Daten gehören z.B. Daten zum und vom Internet, die von den Datenverarbeitungsendgeräten 16, 18 erzeugt bwz. empfangen werden. Die Zwischenstation 38 leitet die nicht verbindungsorientierten Daten über eine Leitung 40 dem Internet 42 bzw. über eine Leitung 44 einem ATM-Netz 46 zu.

Die Zwischenstation 38 kann auch eine Formatwandlung für verbindungsorientierte Daten durchführen, welche als ISDN-Signale zur Vermittlungsstelle 32 übertragen wurden. Hierzu ist die Vermittlungsstelle 32 ausgangsseitig über eine Leitung 39 mit der Zwischenstation 38 verbunden. Ein Beispiel für derartige Daten können ATM-Signale (asynchron transfer mode) sein. Diese gelangen dann über die Leitung 44 zum ATM-Netz, bzw. kommen von diesem Netz. Ebenso können nicht verbindungsorientierte Daten als ISDN-Signale durch die Vermittlungsstelle 32 übertragen und über die Zwischenstation 38 in das angeschlossene Datennetz bzw. aus dem angeschlossenen Datennetz gesendet werden.

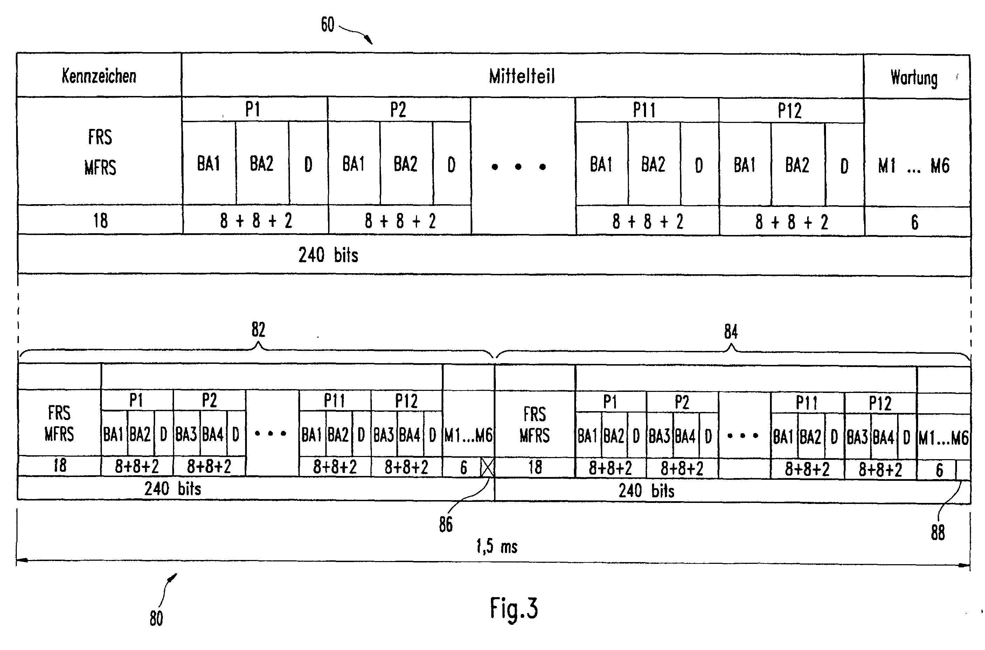

Andererseits werden auch Daten von der Leitungsabschlußeinheit 14 zur Netzabschlußeinheit 12 übertragen, wobei ebenfalls der unten anhand der Figur 3 erläuterte erweiterte ISDN-Standard verwendet wird.

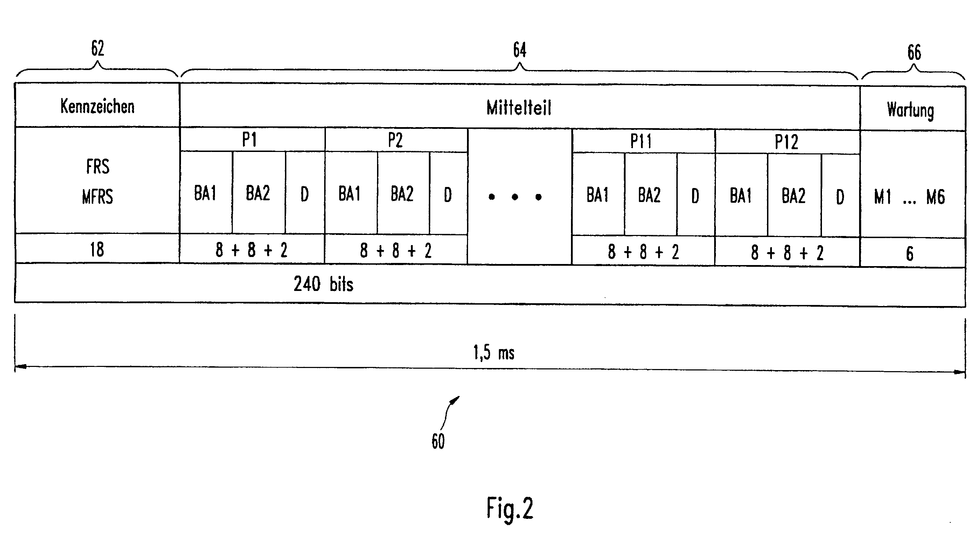

Figur 2 zeigt einen standardgemäßen ISDN-Zeitrahmen, wie er z.B. im technischen Bericht ETR 080 des Europäischen-Telekommunikations-Standardisierungs-Instituts für die Option mit 2B1Q-Übertragung festgelegt ist. Der Zeitrahmen 60 enthält 240 Bits, die innerhalb von 1,5 ms übertragen werden. Übertragen bezieht sich hierbei z.B. auf den Sendevorgang oder den Empfangsvorgang. 18 Bits am Anfang des Zeitrahmens 60 kennzeichnen den Beginn des Zeitrahmens 60 und werden bei der Synchronisation verwendet. Diese Bits werden als Zeitrahmenkennzeichen 62 bezeichnet.

In einem Mittelteil 64 des Zeitrahmens 60 werden abwechselnd jeweils die Daten zweier Nutzkanäle BA1 und BA2 sowie eines Datenkanals D übertragen. Somit sind die Zeitschlitze zur Übertragung der Daten im Nutzkanal BA1, BA2 und im Datenkanal D verschachtelt. Die Nutzdaten werden in den Nutzkanälen BA1 bzw. BA2 als Datenworte mit jeweils acht Bits übermittelt. Die Daten im Datenkanal werden mit einer Breite von je zwei Bits übermittelt. Zwei aufeinanderfolgende Datenworte und die beiden Bits des Datenkanals bilden jeweils eine Gruppe P1 bis P12, in der jeweils achtzehn Bits enthalten sind. Am Ende des Zeitrahmens 60 werden sechs Bits M1 bis M6 übertragen, die für Wartungs- und Übertragungszwecke genutzt werden. Der Teil am Ende des Zeitrahmens 60 wird auch als Wartungsteil 66 bezeichnet. Die Zeitachse in der Figur 2 ist durch einen Pfeil 68 dargestellt, der angibt, daß spätere Zeitpunkte weiter rechts liegen als frühere Zeitpunkte.

Figur 3 zeigt in ihrem oberen Teil den Zeitrahmen 60 zum Vergleich mit einem Gesamtrahmen 80 nach einem ersten Ausführungsbeispiel der Erfindung. Der Gesamtrahmen 80 wird ebenfalls in 1,5 ms übertragen. Jedoch sind im Gesamtrahmen 80 zwei Zeitrahmen 82, 84 enthalten, die jeweils 240 Bits enthalten. Die Datenübertragungskapazität der Nutzkanäle BA1 bis BA4 begrät vier mal 64 kbit/s.

Im gezeigten Beispiel enthält jeder Zeitrahmen 82, 84 die gleiche ganzzahlige Anzahl an Zeitschlitzen für die Nutzkanäle BA1 bis BA4. Bei einer Übertragung einer größeren Zahl von Zeitrahmen je Gesamtrahmen 80 ist dies in der Regel nicht mehr der Fall. Damit ist die Zuordnung der Zeitschlitze zu den einzelnen Nutzkanälen innerhalb der unterschiedlichen Zeitrahmen in einem Gesamtrahmen 80 ebenfalls unterschiedlich und es wird eine Gesamtrahmenkennzeichnung für den Gesamtrahmen verwendet, um empfangsseitig die einzelnen Zeitschlitze in den verschiedenen Zeitrahmen den richtigen Kanälen zuordnen zu können.

Diese Gesamtrahmenkennzeichnung kann auf unterschiedliche Art und Weise erfolgen. So kann z.B. das Zeitrahmenkennzeichen 62 (Zeitrahmenkennungswort FRS/MFRS) in jedem Zeitrahmen um zwei Bit verkürzt werden. Eines dieser Bits oder beide Bits werden im ersten Zeitrahmen (z.B. im Zeitrahmen 82) eines Gesamtrahmens 80 auf einen vorgegebenen Wert gesetzt, welcher vom Wert an derselben Stelle in den übrigen Zeitrahmen desselben Gesamtrahmens 80 abweicht.

Soll das Zeitrahmenkennzeichen 62 der Zeitrahmen gegenüber dem Standard unverändert bleiben, so kann eine im ISDN-Standard definierte Wartungsrahmenkennung verwendet werden. Gemäß ISDN-Standard (Option für 2B1Q-Übertragung) wird das Zeitrahmenkennzeichen FRS in jedem achten Zeitrahmen in ein Wartungsrahmenkennwort MFRS invertiert. Im Zeitrahmen mit dem Wartungrahmenkennwort MFRS haben gemäß ISDN-Standard die Bits mit den Nummern "239" und "240" keine Funktion. Eines dieser Bits oder beide Bits können daher auf einen vorgegebenen Wert gesetzt werden, welcher vom Wert an derselben Stelle in den übrigen Zeitrahmen des jeweiligen Gesamtrahmens abweicht.

Die Wartungsrahmenkennung und die Gesamtrahmenkennzeichnung werden mindestens einmal zeitlich derart synchronisiert, daß der Beginn eines Gesamtrahmens 80 mit dem Beginn eines Wartungsrahmens zusammenfällt. Da der Wartungsrahmens acht Zeitrahmen und der Gesamtrahmen 80 n Zeitrahmen enthält, fällt der Beginn beider Rahmen in der Regel dann nur in größeren Abständen zeitlich zusammen. Dabei ist n eine natürliche Zahl größer null.

In Figur 3 ist das Bit mit der Nummer "240" als Kennzeichenbit 86 für den Gesamtrahmen 80 dargestellt. Das Bit "240" im Zeitrahmen 84 hat keine Kennzeichenfunktion bezüglich des Gesamtrahmens 80 (vgl. Bezugszeichen 88). Das Kennzeichenbit 86 fällt wie erwähnt nach einer Anzahl von Zeitrahmen mit dem Bit "240" des ersten Zeitrahmens eines Wartungsrahmens zusammen. Diese Anzahl ist durch das kleinste gemeinsame Vierfache aus der Zahl von Zeitrahmen im Wartungsrahmen, nämlich acht, und der Zahl von Zeitrahmen n in einem Gesamtrahmen 80 bestimmt. Bei zwei Zeitrahmen je Gesamtrahmen fallen die betreffenden Bitstellen nach jeweils acht Zeitrahmen zusammen. Bei drei Zeitrahmen je Grundrahmen nach 24 Zeitrahmen usw.. Das Kennzeichenbit 86 hat nur beim Zusammentreffen mit dem Bit 240 des Wartungsrahmens den vom Standard abweichenden Wert.

Da die Position des Zusammentreffens durch einfaches Abzählen leicht ermittelt werden kann, ist es zur eindeutigen Identifikation des Gesamtrahmenanfangs ausreichend, die zyklische Überwachung der Bits an der bezeichneten Position "239" und/oder "240" in jedem achten Zeitrahmen durchzuführen, welcher die invertierte Wartungsrahmenkennung MFRS enthält. Die Anfänge der zwischenliegenden Gesamtrahmen 80 werden ebenfalls durch einfaches Abzählen der Bits ermittelt, da die Länge des Gesamtrahmens 80 in Bit aufgrund der Zahl der enthaltenen Zeitrahmen mit jeweils 240 Bits eindeutig gegeben ist.

Es ist kein Nachteil, daß nicht jeder Gesamtrahmen 80 ein Gesamtrahmenkennzeichen enthält, da es bei der Synchronisation nur darauf ankommt, die Synchronisation von Zeit zu Zeit zu überprüfen, um z.B. eine Abweichung durch Stromausfall zu erkennen und einen neuen Synchronisationsvorgang einzuleiten.

Werden nur Endgeräte betrieben, die eine Datenübertragungskapazität von 64 kbit/s haben, so können im in Figur 3 dargestellten Beispiel vier Nutzkanäle BA1 bis BA4 verwendet werden. In diesem Fall ist es zweckmäßig, die Nutzkanäle BA1 bis BA4 ähnlich wie die Nutzkanäle BA1 und BA2 im Zeitrahmen 60 zu verschachteln. Durch das Verschachteln der Nutzkanäle BA1 bis BA4 und damit auch der Datenkanäle D wird bei einem Übertragungsfehler nur ein kleiner Teil der Daten jedes Nutzkanals BA1 bis BA4 betroffen. Eine Fehlerkorrektur wird somit erleichtert.

Die Datenübertragung in den Nutzkanälen BA1 bis BA4 kann sowohl verbindungsorientiert als auch nicht verbindungsorientiert erfolgen. So kann im Nutzkanal BA1 eine verbindungsorientierte Übertragung durchgeführt werden und im Nutzkanal BA2 eine nicht verbindungsorientierte Datenübertragung. Die Daten einer nicht verbindungsorientierten Übertragung werden üblicherweise als Datenpakete übertragen. Im Sender des Gesamtrahmens 80 werden die Datenpakete auf die Zeitschlitze des Nutzkanals BA2 verteilt. Im Empfänger des Gesamtrahmens 80 werden aus den Daten des Nutzkanals BA2 dann wieder die Datenpakete zusammengestellt.

Der Anfang eines Datenpakets kann dabei je nach Größe des Datenpakets mit den ersten Daten des Nutzkanals BA2 in einem Zeitrahmen 82, 84, in einem Gesamtrahmen 80 oder auch erst in jedem vierten Gesamtrahmen 80 zusammenfallen. Das Ende eines Datenpakets kann im Empfänger aufgrund der dort bekannten Größe des zu übermittelnden Datenpakets festgestellt werden. Diese Größe kann standardisiert sein oder aber in den Anfangsdaten eines Datenpakets dem Empfänger übermittelt werden. Der Anfang eines Datenpakets kann jedoch auch an beliebiger Stelle erfolgen. Zur Erkennung wird beispielsweise eine Präambel, also eine dem eigentlichen Datenpaket vorlaufende, bekannte Bitfolge verwendet.

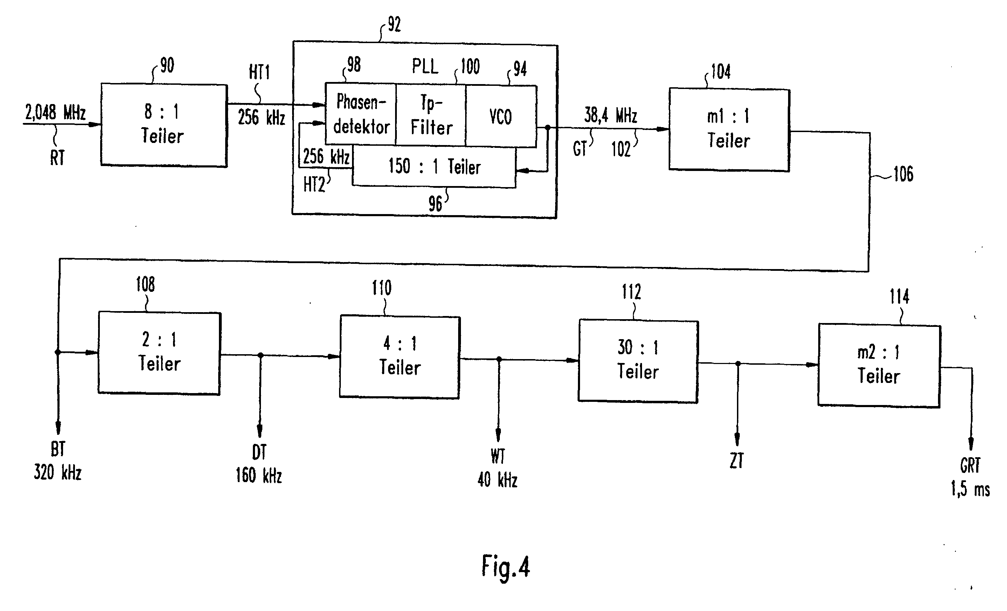

Figur 4 zeigt die wesentlichen elektronischen Einheiten zur Erzeugung verschiedener Taktsignale in der Leitungsabschlußeinheit 14 (vgl. Figur 1). In der Leitungsabschlußeinheit 14 steht ein sehr stabiler Referenztakt RT von 2,048 MHz zur Verfügung. Ein vom Referenztakt RT abgeleiteter Takt wird als Sollgröße in einer Nachlaufsynchronisation (Phase-Locked-Loop PLL) genutzt. Ziel ist ein stabiler Grundtakt GT von 38,4 MHz.

Bevor der Referenztakt RT zur Steuerung der PLL genutzt wird, wird er in einem Teiler/Zähler 90 im Verhältnis 8:1 geteilt. Dabei entsteht ein Hilfstakt HT1 von 256 kHz, der am Eingang einer Phasensteuerungseinheit 92 anliegt. Die Phasensteuerungseinheit 92 enthält einen spannungsgesteuerten Oszillator 94, der mit 38,4 MHz schwingt, so daß der Grundtakt GT entsteht. Mit einem Teiler/Zähler 96 wird der Grundtakt GT im Verhältnis 150:1 geteilt, so daß ein Hilfstakt HT2 mit einer Frequenz von 256 kHz entsteht.

Die beiden Hilfstakte HT1 und HT2 von jeweils 256 kHz werden einem Phasendetektor 98 als Eingangsgrößen zugeführt. Der Phasendetektor 98 berechnet aus der Abweichung der Phasen des Hilfstaktes HT1 und des Hilfstaktes HT2 eine Regelgröße für den spannungsgesteuerten Oszillator 94. Zwischen dem Ausgang des Phasendetektors 98 und dem Eingang zur Steuerung des spannungsgesteuerten Oszillator 94 ist weiterhin ein Tiefpaßfilter 100 angeordnet um die Genauigkeit der Regelung zu erhöhen.

Am Ausgang der Phasensteuerungseinheit 92 steht somit ein sehr stabiler Grundtakt GT auf einer Leitung 102 zur Verfügung. Die Leitung 102 ist mit dem Eingang eines Teilers/Zählers 104 verbunden, dessen Teilungsverhältnis durch einen vorgegebenen Teilerwert ml bestimmt ist. Bei zwei Zeitrahmen pro Gesamtrahmen hat der Teilerwert ml den numerischen Wert "120", so daß auf einer Ausgangsleitung 106 des Teilers/Zählers 104 ein Bittakt von 320 kHz erzeugt wird. Dieser Takt bestimmt die Bearbeitungszeit für eine Bitstelle im Gesamtrahmen 80 (vgl. Figur 3).

Durch Teilung des Bittakts BT in einem Teiler/Zähler 108 im Verhältnis 2:1 entsteht ein Doppelbittakt DT von 160 kHz. Da bei dem im Ausführungsbeispiel genutzten ISDN-Standard ETR 080 bei der Übertragung jeweils zwei Bits zu einem Quad zusammengefaßt werden, kommt dem Doppelbittakt DT eine besondere Bedeutung zu. Der Doppelbittakt DT ist nämlich genau der Takt, mit dem die Signalwerte auf der Datenleitung 10 (vgl. Figur 1) variieren können. Zulässig sind vier Signalwerte. Aus dem jeweils empfangenen Signalwert werden zwei Bitstellen des Gesamtrahmens 80 ermittelt.

In einem Zähler/Teiler 110 wird dann der Doppelbittakt DT im Verhältnis 4:1 geteilt. Dabei entsteht ein Worttakt WT von 40 kHz. Der Worttakt WT wird bei der Bearbeitung von jeweils acht Bit, also einem Datenwort, des Gesamtrahmens 80 (vgl. Figur 3) verwendet.

In einem weiteren Teiler/Zähler 112 wird der Worttakt WT im Verhältnis 30:1 geteilt. Dabei entsteht ein Zeitrahmentakt ZT, der zur Bearbeitung der Zeitrahmen genutzt wird.

In einem letzten Teiler/Zähler 114 wird die Frequenz des Zeitrahmentakts ZT durch einen Teilerwert m2 geteilt. Im Fall von zwei Zeitrahmen je Gesamtrahmen 80 (vgl. Figur 3) hat der Teilerwert m2 den numerischen Wert "2". Am Ausgang des Zählers/Teilers 114 entsteht der Gesamtrahmentakt GRT mit einer Periodendauer von 1,5 ms. Der Gesamtrahmentakt GRT wird zur Synchronisation der Gesamtrahmen verwendet.

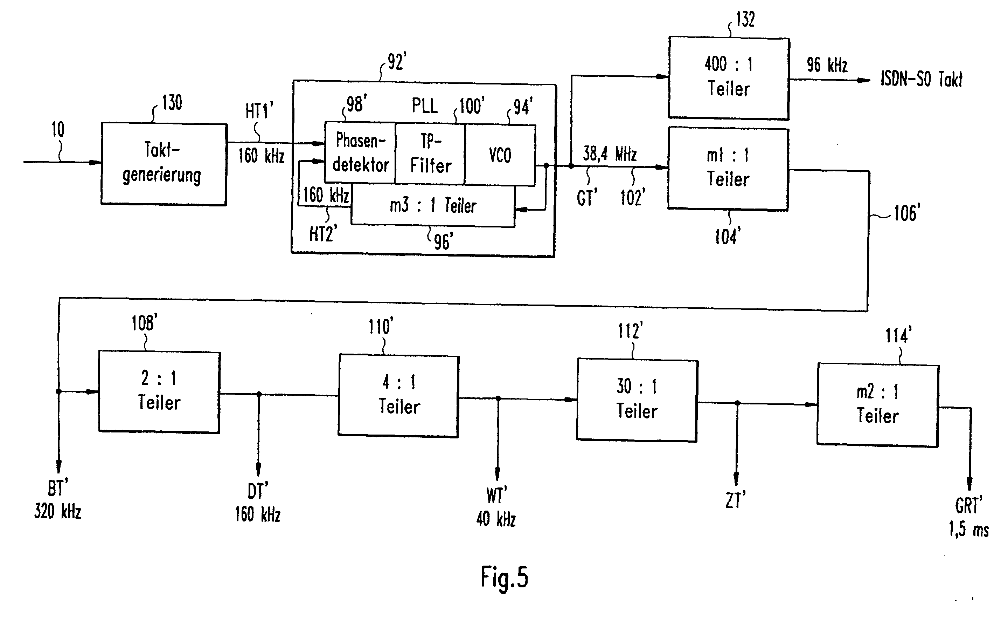

Figur 5 zeigt die wesentlichen elektronischen Einheiten zum Erzeugen verschiedener Taktsignale in der Netzabschlußeinheit 12 (vgl. Figur 1). In der Netzabschlußeinheit 12 steht der Referenztakt RT nicht zur Verfügung. Daraus ergibt sich eine gegenüber der Figur 4 etwas veränderte Takterzeugung. In Figur 4 bereits erläuterte Einheiten erhalten in Figur 5 das gleiche Bezugszeichen jedoch mit einem hochgestellten Strich.

Aus den Signalwerten auf der Datenleitung 10 wird in einer Takterzeugungseinheit 130 ein Hilfstakt HT1' erzeugt, dessen Frequenz bei zwei Zeitrahmen pro Gesamtrahmen 80 160 kHz beträgt. Diese Frequenz stimmt, wie oben erwähnt, mit der durch die Signalwechsel auf der Datenleitung 10 entstehenden Frequenz überein. Aus einem auch in der Phasensteuerungseinheit 92' erzeugten Grundtakt GT' von 38,4 MHz wird im Teiler/Zähler 96' ein Hilfstakt HT2' erzeugt. Dabei wird die Frequenz des Grundtakts GT' durch einen Teilerwert m3 geteilt. Der Teilerwert m3 hat im Fall von zwei Zeitrahmen je Gesamtrahmen 80 den numerischen Wert "240". Somit ergibt sich für den Hilfstakt HT2' eine Frequenz von 160 kHz. Das Erzeugen des Grundtaktes GT' erfolgt in der Phasensteuerungseinheit 92' dann so wie anhand der Phasensteuereinheit 92 (vgl. Figur 4) oben erläutert.

Aus dem Grundtakt GT' in der Netzabschlußeinheit 12 (vgl. Figur 1) werden mit Hilfe einer Teilerkette aus den Teilern/Zählern 104' bis 114' ein Bittakt BT', ein Doppelbit-Takt DT', ein Worttakt WT' (acht Bit), ein Zeitrahmentakt ZT' sowie ein Gesamtrahmentakt GRT' erzeugt. Die Frequenzen dieser Taktsignale stimmen mit den Frequenzen der entsprechenden Taktsignale BT, DT, WT, ZT und GRT überein.

Mit einem Teiler/Zähler 132 wird die Frquenz des Grundtaktes GT' durch den Wert "400" geteilt. Am Ausgang des Teilers/Zählers 132 entsteht somit ein Taktsignal mit einer Frequenz von 96 kHz. Dies ist der Takt für die ISDN-S0 Schnittstelle.

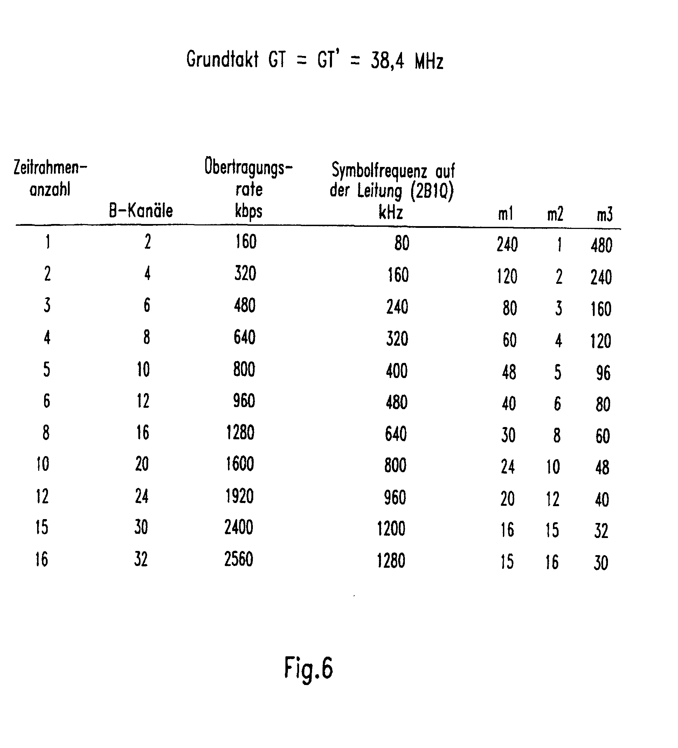

Figur 6 zeigt eine Tabelle, deren Spalten von links nach rechts die im folgenden erläuterten Bedeutungen haben. In der ersten Spalte steht die Anzahl der Zeitrahmen in einem Gesamtrahmen 80 (vgl. Figur 3). Die zweite Spalte gibt die Anzahl der Kanäle mit einer Übertragungskapazität von 64 kbit/s (B-Kanäle) im Gesamtrahmen an. In der darauffolgenden Zeile ist die Übertragungsrate auf der Leitung in kbit/s eingetragen. Daneben ist die Symbolfrequenz (in KHz) bei der Übertragung dargestellt. In der fünften, sechsten bzw. siebten Spalte sind die jeweiligen Teilerwerte m1, m2 und m3 eingetragen.

Die erste Zeile zeigt Zahlenwerte für einen Gesamtrahmen 80 mit nur einem Zeitrahmen. In diesem Fall hat ein Zeitrahmen die durch den ISDN-Standard vorgegebene Zeitdauer von 1,5 ms. Gemäß ISDN-Standard gibt es zwei Nutzkanäle von jeweils 64 kbit/s. Die Übertragungsrate beträgt 160 kbit/s und die Symbolfrequenz auf der Leitung bei 2B1Q-Codierung ist 80 kHz. Die Teilerwerte m1, m2 und m3 haben in dieser Reihenfolge die Werte "240", "1" und "480".

Die zweite Zeile der Tabelle in Figur 6 zeigt die Zahlenwerte für das oben anhand der Figuren 3 bis 5 erläuterte Ausführungsbeispiel mit zwei Zeitrahmen je Gesamtrahmen. Die Datenübertragungskapazität liegt in diesem Fall bei 320 kbit/s und es sind vier Nutzkanäle mit jeweils 64 kbit/s vorhanden. Mehrere Nutzkanäle können auch zu einem Nutzkanal zusammengefaßt werden, so daß z.B. nur ein Nutzkanal mit einer Datenübertragungsrate von 256 kbit/s entsteht.

Die vorletzte Zeile enthält die Werte bei fünfzehn Zeitrahmen je Gesamtrahmen. In diesem Fall stehen dreißig Nutzkanäle mit jeweils 64 kbit/s zur Verfügung. Die Datenübertragungskapazität der Nutzkanäle beträgt insgesamt 2,4 Mbit/s. Bei Zusammenfassen dieser Kanäle zu einem Kanal sind z.B. hochwertige Videoübertragungen möglich, wenn Datenkompressionsverfahren angewendet werden. Eine Datenübertragungskapazität von etwa zwei Mbit/s wird in kleinen Büros oder Bürogemeinschaften sowie in Haushalten selten überschritten. Demzufolge ist als letzte Zeile in der Tabelle der Figur 6 der Fall abgetragen, bei dem sechzehn Zeitrahmen in einem Gesamtrahmen liegen.

Durch Verändern der Teilerwerte m1, m2, m3 nach der Tabelle in Figur 6 können Takte für die Übertragung von Gesamtrahmen mit bis zu sechzehn Zeitrahmen in den in Spalte 1 angegebenen Schritten realisiert werden. Somit ist ein einheitliches Konzept vorgegeben, um vom derzeitigen ISDN-Standard schrittweise durch Vervielfachen der Zeitrahmenanzahl je Gesamtrahmen eine Datenübertragungskapazität von etwa 2 Mbit/s zu erreichen. Diese Vorgehensweise baut auf den vorhandenen Zweidrahtleitungen auf und geht bis an die Grenze der auf diesen Leitungen über eine hinreichend große Entfernung erreichbaren Datenrate.

Das einheitliche Konzept gestattet weiterhin, die Datenübertragungskapazität an die Qualität der Datenleitung 10 (vgl. Figur 1) anzupassen. Dazu wird in einem Einmeßvorgang zu einer vorgegebenen maximal zulässigen Fehlerrate die maximal mögliche Datenübertragungskapazität ermittelt. Abhängig von dieser Datenübertragungskapazität wird dann z.B. mit der Tabelle aus Figur 6 die Anzahl der Zeitrahmen je Grundrahmen bestimmt. Außerdem können die Teilerwerte m1, m2 und m3 abgelesen werden.

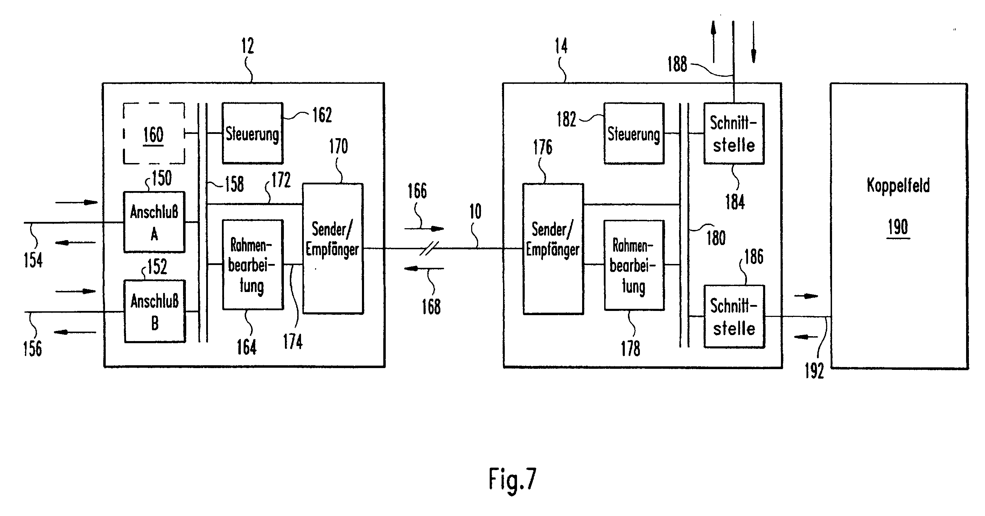

Figur 7 zeigt den Aufbau der Netzabschlußeinheit 12 und der Leitungsabschlußeinheit 14. Die Netzabschlußeinheit 12 enthält zwei Anschlußeinheiten 150 und 152, an die über Leitungen 154 bzw. 156 jeweils ein Endgerät angeschlossen ist. Die Datenübertragung auf den Leitungen 154, 156 ist bidirektional, wie durch Pfeile angedeutet. Die Anschlußeinheiten 150 und 152 sind weiterhin mit einem Leitungs-Bus 158 verbunden. Am Bus 158 sind weitere Anschlußeinheiten 160 für Endgeräte angeschlossen. Außerdem ist eine Steuereinheit 162 mit dem Bus 158 verbunden, die die gesamte Kommunikation zwischen den in der Netzabschlußeinheit 12 enthaltenen Einheiten 150, 152, 160, 164, 170 steuert.

Die Netzabschlußeinheit 12 enthält weiterhin eine Rahmenbildungs-/Zerlegungseinheit 164, in der die Gesamtrahmen 80 (vgl. Figur 3) erzeugt werden, wenn Daten von der Netzabschlußeinheit 12 zur Leitungsabschlußeinheit 14 übertragen werden, und die die Daten der Gesamtrahmen 80 auf die Anschlußeinheiten 150, 152 und 160 aufteilt, wenn Daten in umgekehrter Richtung übertragen werden (vgl. Pfeile 166 und 168). Ein Sende-/Empfangsbaustein 170 sendet die Gesamtrahmen dann über die Datenleitung 10 an die Leitungsabschlußeinheit 14 in Form eines Vierstufensignals (2B1Q) bzw. empfängt die von der Leitungsabschlußeinheit 14 kommenden Gesamtrahmen. Der Sende-/Empfangsbaustein 170 ist sowohl mit dem Bus 158 als auch mit der Rahmenbildungs-/Zerlegungseinheit 164 über Leitungen 172 bzw. 174 verbunden.

Das andere Ende der Datenleitung 10 ist mit einem Sende-/Empfangsbaustein 176 in der Leitungsabschlußeinheit 14 verbunden. Der Sende-/Empfangsbaustein 176 empfängt die von der Netzabschlußeinheit 12 kommenden Gesamtrahmen bzw. sendet Gesamtrahmen von der Leitungsabschlußeinheit 14 zur Netzabschlußeinheit 12. Die Gesamtrahmen werden in der Leitungsabschlußeinheit in einer Rahmenbildungs-/Zerlegungseinheit 178 vor dem Senden erzeugt bzw. nach dem Empfangen zerlegt. Die Rahmenbildungs-/Zerlegungseinheit 158 ist mit einem Bus 180 verbunden. Eine Steuereinheit 182 steuert die Kommunikation zwischen den in der Leitungsabschlußeinheit 14 enthaltenen Einheiten 176, 178, 184, 186.

Die Leitungsabschlußeinheit 14 enthält weiterhin eine erste Schnittstelleneinheit 184 für nicht verbindungsorientierte Übertragungen und eine zweite Schnittstelleneinheit 186 für verbindungsorientierte Übertragungen. Beide Schnittstelleneinheiten 184, 186 sind mit dem Bus 180 verbunden. Über die Schnittstelleneinheit 184 werden Datenübertragungen realisiert, die nicht verbindungsorientiert sind, wie z.B. Verbindungen zum Internet. Diese Übertragungen sind dadurch gekennzeichnet, daß der Übertragungsweg der Daten nicht vor der Übertragung festgelegt wird. Die Daten können somit, z.B. abhängig von der festgestellten Belastung verschiedener Verbindungswege, auf unterschiedlichen Verbindungswegen übertragen werden. An der Schnittstelleneinheit 184 ist eine bidirektionale Übertragungsleitung 188 angeschlossen, die Teil eines Datennetzes ist, das nicht verbindungsorientierte Übertragungen ermöglicht.

Die Schnittstelleneinheit 186 realisiert die verbindungsorientierte Übertragung von Daten. Dazu ist sie mit einem Koppelfeld 190 zur Vermittlung einer Verbindung über eine Leitung 192 verbunden. Zum Beispiel werden vermittelte ISDN-Daten über die Leitung 192 in das Koppelfeld 190 bzw. vom Koppelfeld 190 zur Schnittstelleneinheit 186 übertragen.

## Patentansprüche

1. Verfahren zum Übertragen digitaler Daten nach dem Zeit-Multiplexverfahren,
bei dem die Datenbits innerhalb einer Folge von Zeitrahmen (82, 84) übertragen werden,
wobei im jeweiligen Zeitrahmen (82, 84) zumindest die Zahl von übertragenen Datenbits mit dem ISDN-Standard übereinstimmt,
**dadurch gekennzeichnet, daß** innerhalb der durch den ISDN-Standard vorgegebenen Zeit für die Übertragung eines ISDN-Standardzeitrahmens (60) mehrere Zeitrahmen (82, 82) übertragen werden, die einen Gesamtrahmen (80) bilden,
wobei mindestens ein Gesamtrahmen (80) der Folge von übertragenen Gesamtrahmen (80) ein Rahmenkennzeichen (86) enthält, anhand dessen die Zuordnung (82, 84) der enthaltenen Zeitrahmen zum Gesamtrahmen (80) festgestellt wird.

2. Verfahren nach Anspruch 1, **dadurch gekennzeichnet, daß** anhand des Rahmenkennzeichens (86) die übertragenen Daten zu verschiedenen Kanälen (BA1 bis BA4) zugeordnet werden.

3. Verfahren nach Anspruch 1 oder 2, **dadurch gekennzeichnet, daß** die Anzahl von Zeitrahmen (82, 84) je Gesamtrahmen in einem Einmeßvorgang abhängig von der Übertragungsqualität der Übertragungsstrecke (10) zum Übertragen der Signalwerte von einem Sender (12) zu einem Empfänger (14) bestimmt wird.

4. Verfahren nach Anspruch 3, **dadurch gekennzeichnet, daß** der Einmeßvorgang wiederholt wird, wenn eine vorgegebene Fehlerrate für die Übertragung der Daten überschritten wird.

5. Verfahren nach einem der vorhergehenden Ansprüche, **dadurch gekennzeichnet, daß** als ISDN-Standard der im technischen Bericht ETR 80 des Europäischen-Telekommunikations-Standardisierungs-Instituts (ETSI) angegebene Standard oder ein auf diesem Standard aufbauender Standard verwendet wird, wobei vorzugsweise die im Standard festgelegte Option für 2B1Q-Übertragung genutzt wird.

6. Verfahren nach einem der vorhergehenden Ansprüche, **dadurch gekennzeichnet, daß** als Rahmenkennzeichen (86) mindestens ein Datum an einer vorgegebenen Position im Gesamtrahmen (84) mit einem vorgegebenen Wert vorgesehen ist, der von einem gegebenenfalls durch den ISDN-Standard für diese Position vorgegebenen Wert abweicht.

7. Verfahren nach Anspruch 6, **dadurch gekennzeichnet, daß** das Ermitteln des Rahmenkennzeichens (86) in Kombination mit dem Ermitteln der durch den ISDN-Standard vorgegebenen Zeitrahmenkennzeichen (62) in den Zeitrahmen (82, 84) erfolgt.

8. Verfahren nach einem der vorhergehenden Ansprüche, **dadurch gekennzeichnet, daß** in mindestens einem Kanal (BA1, BA2) Daten einer verbindungsorientierten Übertragung und/oder daß in mindestens einem Kanal (BA3, BA4) Daten einer nicht verbindungsorientierten Übertragung übertragen werden.

9. Verfahren nach Anspruch 8, **dadurch gekennzeichnet, daß** im Gesamtrahmen mindestens ein Datum an einer weiteren vorgegebenen Position im Gesamtrahmen (80) den Beginn der Übertragung von zu einem Datenpaket gehörenden Daten im Kanal für die nicht verbindungsorientierte Übertragung signalisiert.

10. Verfahren nach einem der vorhergehenden Ansprüche, **dadurch gekennzeichnet, daß** ein Synchronisationstakt (GRT, GRT') zur Synchronisation des Gesamtrahmens (80) aus einem vorgegebenen Grundtakt (GT, GT') erzeugt wird,
wobei mindestens ein Teilerbaustein (104 bis 114, 104' bis 114') verwendet wird, dessen Teilungsverhältnis an die Anzahl von Zeitrahmen je Gesamtrahmen angepaßt werden kann.

11. Verfahren nach Anspruch 10, **dadurch gekennzeichnet, daß** vorzugsweise beim Verwenden der im ISDN-Standard festgelegten Option für 2B1Q-Übertragung der Grundtakt 38,4 MHz beträgt.

12. Schaltungsanordnung zum Übermitteln digitaler Daten, zum Durchführen des Verfahrens nach einem der vorhergehenden Ansprüche,
mit einer Empfangseinheit (150, 152; 184, 186) zum Empfangen von Nutzdaten, die beim Nutzen mindestens eines Übertragungsdienstes zum Übertragen von Daten erzeugt wurden,
einer Rahmenerzeugungseinheit (164; 178) zum Erzeugen einer zeitlichen Reihenfolge der Nutzdaten, wobei Rahmen (80) erzeugt werden, die eine im ISDN-Standard vorgegebene Anzahl von Daten erhalten,
und mit einer Ausgabeeinheit (170; 176) zum Senden der Daten,
**dadurch gekennzeichnet, daß** die Ausgabeeinheit (170; 176) innerhalb der durch den ISDN-Standard vorgegebenen Zeit zur Übertragung eines ISDN-Rahmens mehrere Rahmen (82, 84) sendet, die einem Gesamtrahmen (80) bilden,
wobei mindestens ein Gesamtrahmen (80) der Folge von übertragenen Gesamtrahmen ein Rahmenkennzeichen (86) enthält, anhand dessen die Zuordnung der Rahmen (82, 84) zu einem Gesamtrahmen (80) festgestellt wird.

## Claims

1. Method for transmitting digital data using the time-division multiplex method,
in which the data bits are transmitted within a sequence of time frames (82, 84),
in which case at least the number of transmitted data bits in each time frame (82, 84) matches the ISDN Standard,
**characterized in that** a plurality of time frames (82, 82), which form an overall frame (80), are transmitted within the time which is specified by the ISDN Standard for the transmission of an ISDN Standard time frame (60),
in which case at least one overall frame (80) in the sequence of transmitted overall frames (80) contains a frame identifier (86), using which the assignment (82, 84) of the contained time frames to the overall frame (80) is defined.

2. Method according to Claim 1, **characterized in that** the frame identifier (86) is used to assign the transmitted data to different channels (BA1 to BA4).

3. Method according to Claim 1 or 2, **characterized in that** the number of time frames (82, 84) per overall frame is determined in a calibration process, as a function of the transmission quality of the transmission path (10) for transmitting the signal values from a transmitter (12) to a receiver (14).

4. Method according to Claim 3, **characterized in that** the calibration process is repeated if a predetermined error rate for the transmission of data is exceeded.

5. Method according to one of the preceding claims, **characterized in that** the ISDN Standard specified in Technical Report ETR 80 by the European Telecommunications Standardization Institute (ETSI) or a Standard based on this Standard is used, in which case the option for 2B1Q transmission defined in the Standard is preferably used.

6. Method according to one of the preceding claims, **characterized in that** at least one data item at a predetermined position in the overall frame (84) is provided with a predetermined value as the frame identifier (86), which value differs from a value which may be specified for this position by the ISDN Standard.

7. Method according to Claim 6, **characterized in that** the frame identifier (86) is determined in conjunction with the determination of the time frame identifiers (86) (specified by the ISDN Standard) in the time frames (82, 84).

8. Method according to one of the preceding claims, **characterized in that** data for a connection-oriented transmission are transmitted in at least one channel (BA1, BA2), and/or **in that** data for a transmission which is not connection-oriented are transmitted in at least one channel (BA3, BA4).

9. Method according to Claim 8, **characterized in that**, in the overall frame, at least one data item at a further specified position in the overall frame (80) signals the start of the transmission of data which are associated with a data packet, in the channel for the transmission which is not connection-oriented.

10. Method according to one of the preceding claims, **characterized in that** a synchronization clock (GRT, GRT') is produced from a specified basic clock (GT, GT'), for synchronization of the overall frame (80),
in which case at least one divider module (104 to 114, 104' to 124') is used, whose division ratio can be matched to the number of time frames per overall frame.

11. Method according to claim 10, **characterized in that** the basic clock is preferably 38.4 MHz when using the option for 2B1Q transmission defined in the ISDN Standard.

12. A circuit arrangement for transmitting digital data for carrying out the method according to one of the preceding claims,
having a receiving unit (150, 152; 184, 186) for receiving useful data which have been produced when using at least one transmission service for transmitting data,
having a frame producing unit (164; 178) for producing a time sequence of useful data, in which case frames (80) are produced which contain a number of data specified in the ISDN Standard,
and having an output unit (170; 176) for transmitting the data,
**characterized in that** the output unit (170; 176) transmits a plurality of frames (82, 84), which form an overall frame (80), within the time which is specified by the ISDN Standard for transmitting an ISDN frame,
in which case at least one overall frame (80) in the sequence of transmitted overall frames contains a frame identifier (86) using which the assignment of the frames (82, 84) to an overall frame (80) is defined.

## Revendications

1. Procédé pour transmettre des données numériques selon la technique du multiplexage temporal, dans lequel
les bits de données sont transmis dans une suite de cadres temporels (82, 84),
au moins le nombre de bits de données transmis étant en accord avec la norme RNIS dans chaque cadre temporal (82, 84),
**caractérisé en ce que** sont transmis, dans le temps alloué par la norme RNIS pour la transmission d'un cadre temporal (60) conforme à la norme RNIS, plusieurs cadres temporels (82, 84) formant un cadre global (80),
au moins un cadre global (80) de la suite de cadres globaux (80) transmis contenant un identificateur de cadre (86) permettant d'établir l'assignation (82, 84) des cadres temporels contenus par rapport au cadre global (80).

2. Procédé selon la revendication 1, **caractérisé en ce que** l'identificateur de cadre (86) permet d'assigner à différents canaux (BA1 à BA4) les données transmises.

3. Procédé salon la revendication 1 ou 2, **caractérisé en ce que** le nombre de cadres temporéls (82, 84) par cadre global est défini dans une opération d'étalonnage en dépendance de la qualité de la transmission de la distance de transmission (10) pour la transmission des valeurs de signaux d'un émetteur (12) à un récepteur (14).

4. Procédé selon la revendication 3, **caractérisé en ce que** l'opération d'étalonnage est répétée en cas de dépassement d'un taux d'erreur donné pour la transmission des données.

5. Procédé selon l'une des revendications précédentes, **caractérisé par** l'utilisation, en tant que norme RNIS, de la norme indiquée dans l'«Evaluation Technical Report» ETR 80 de l'Institut européen de standardisation des télécommunications (ETSI) ou une norme élaborée sur la base de ladite norme, l'option pour transmission 2B1Q déterminée dans la norme étant de préférence utilisée.

6. Procédé selon l'une des revendications précédentes, **caractérisé en ce qu'**est prévue, en tant qu'identificateur de cadre (86), au moins une donnée à une position donnée dans le cadre global (84) avec une valeur donnée, laquelle diffère dune valeur éventuellement donnée par la norme RNIS pour cette position.

7. Procédé selon la revendication 6, **caractérisé en ce que** la détermination de l'identificateur de cadre (86) se fait en combinaison avec la détermination des identificateurs de cadre temporel (62) donnés par la norme RNIS dans les cadres temporels (82, 84).

8. Procédé selon l'une des revendications précédentes, **caractérisé en ce que** des données dune transmission orientée liaison sont transmises dans au moins un canal (BA1, BA2) et/ou **en ce que** des données dune transmission non orientée liaison sont transmises dans au moins un canal (BA3, BA4).

9. Procédé selon la revendication 8, **caractérisé en ce que**, dans le cadre global, au moins une donnée signale à une autre position donnée dans le cadre global (80) le début de la transmission de données appartenant à un paquet de données dans le canal pour la transmission non orientée liaison.

10. Procédé selon l'une des revendications précédentes, **caractérisé en ce qu'**un rythme de synchronisation (GRT, GRT') est généré sur la base d'un rythme de base donné (GT, GT') pour la synchronisation du cadre global (80),
au moins un composant diviseur (104 à 114, 104' à 114') étant utilisé, dont le rapport de division peut être adapté au nombre de cadres temporels par cadre global.

11. Procédé selon la revendication 8, **caractérisé en ce que** le rythme de base est de 38,4 MHz de préférence lors de l'utilisation de l'option pour transmission 2B1Q spécifiée dans la norme RNIS.

12. Circuit de transmission de données numériques pour exécuter le procédé selon l'une des revendications précédentes, comprenant
une unité de réception (150, 152; 184, 186) pour la réception de données utiles qui ont été générées pour la transmission de données lors de l'utilisation d'au moins un service de transmission,
une unité génératrice de cadres (164; 178) pour générer une suite temporelle de données utiles, des cadres (80) étant générés qui contiennent un nombre de données donné par la norme RNIS et
une unité de sortie (170; 186) pour émettre les données,
**caractérisé en ce que** l'unité de sortie (170; 176) émet, dans l'espac de temps donné par la norme RNIS pour la transmission d'un cadre RNIS, plusieurs cadres (82, 84) qui forment un cadre global (80), au moins un cadre global (80) de la suite de cadres globaux transmis comprenant un identificateur de cadre (86) permettant d'établir l'assignation des cadres (82, 84) à un cadre global (80).
